# EUROPÄISCHE PATENTSCHRIFT

(11) **EP 2 471 588 B1**
(45) Veröffentlichungstag und Bekanntmachung des Hinweises auf die Patenterteilung: **26.11.2014**
(21) Anmeldenummer: 11192117.7
(22) Anmeldetag: 06.12.2011
(51) Int. Cl.: B01D 45/16, B01D 50/00, B01D 46/00

(54) **Vorrichtung zur Abscheidung von Flüssigkeiten aus Gasen**
Filter device for separating liquids from gases
Dispositif de séparation de liquides à partir de gaz

(30) Priorität: 04.01.2011 DE 102011007971
(43) Veröffentlichungstag der Anmeldung: 04.07.2012
(73) Patentinhaber: Mann + Hummel GmbH, 71638 Ludwigsburg (DE)
(72) Erfinder: Heikamp, Wolfgang, 67165 Waldsee (DE)

(56) Entgegenhaltungen:
- AT-B- 27 838
- DE-A1- 10 019 836
- DE-A1-102005 062 245
- US-A- 3 766 720

## Beschreibung

Die Erfindung betrifft eine Vorrichtung zur Abscheidung von Flüssigkeiten aus Gasen umfassend einen (Druck-)Behälter mit einem Gaseinlass und einem Gasauslass sowie mit einem Abscheideelement, insbesondere Luftentölelement, das im Strömungsweg zwischen dem Gaseinlass und dem Gasauslass angeordnet ist.

### Stand der Technik

Eine derartige Vorrichtung ist beispielsweise aus der EP 1 844 840 A2 bekannt geworden und kann zur Abscheidung von Wasser und/oder Öl aus Luft eingesetzt werden. Bei der in der EP 1 844 840 A2 beschriebenen Vorrichtung bilden ein Vorabscheider, ein Hauptabscheider und ein Nachabscheider ein Abscheideelement bzw. ein Luftentölelement, das in einen Druckbehälter einsetzbar ist. Der Druckbehälter umfasst einen aufschraubbaren Deckel und einen Korpus sowie Lufteinlässe und Luftauslässe. Ferner weist der Druckbehälter an seinem geodätisch unteren Ende einen Ölsumpf sowie einen Ölauslass auf. Der Druckbehälter ist typischerweise aus Stahl gefertigt. Aus der DE 10 2005 062 245 A1 ist ein System zur Gasreinigung bekannt, mit einer vom Gas durchströmten Filtereinrichtung, wobei das System stromaufwärts der Filtereinrichtung eine Anordnung zur Vorentfeuchtung des Gases aufweist.

Grundsätzlich bestehen verschiedene Möglichkeiten, wie Gase bei technischen Anwendungen mit Flüssigkeiten bzw. Flüssigkeitstropfen verunreinigt werden können. So können Flüssigkeitstropfen zunächst mechanisch, z.B. beim Durchströmen des Gases durch eine Flüssigkeit oder bei einer Führung eines Gasstroms über eine Flüssigkeit mitgerissen werden. Flüssigkeitstropfen können ferner auch durch Kondensation in einem Gasstrom entstehen. Bei der Herstellung von Druckluft in Luftverdichtungssystemen werden in der Regel Temperaturen von etwa 200 °C erreicht. Durch die hohen Temperaturen kann ein Teil des Öls, das z.B. in einen Schraubenkompressor zugeführt wird, verdampfen. Bei einer anschließenden Abkühlung kondensiert der Öldampf zu Tröpfchen und Nebel.

Die oben beschriebene Vorrichtung wird daher insbesondere bei Luftverdichtungssystemen verwendet, die einen Kompressor, z.B. einen Schraubenkompressor, sowie einen Druckspeicher umfassen. Dabei wird die Vorrichtung zur Entölung der Luft verwendet, die durch die Verdichtung im Kompressor mit Öl verunreinigt wurde. Das Öl wird dabei zur Abdichtung, Kühlung und zur Schmierung des Kompressors verwendet. Damit die während der Kompression mit Öl verunreinigte Luft technisch genutzt werden kann, ist typischerweise vor dem Einströmen der Luft in einen Druckspeicher des Luftverdichtungssystems ein Druckbehälter mit einem integrierten Luftentölelement, z.B. gemäß der EP 1 844 840 A2, vorgeschaltet. Die ölhaltige Druckluft strömt dann über einen in der Regel tangentialen Einlass, der im unteren Bereich des Druckbehälters angeordnet ist, in den Druckbehälter ein, um anschließend das oberhalb des Lufteinlasses angeordnete Luftentölelement, das aus dem Vorabscheider, dem Hauptabscheider und dem Nachabscheider besteht, zu durchströmen und schließlich im gereinigten Zustand den Druckbehälter über den Luftauslass zu verlassen. Öl, das z.B. durch den Vorabscheider des Luftentölelements von der Luft getrennt wird, tropft dann schwerkraftbedingt in den Ölsumpf bzw. das Sammelbecken am geodätisch unteren Ende des Druckbehälters.

Bei bekannten Vorrichtungen zur Abscheidung von Flüssigkeiten aus Gasen in Druckbehältern wirkt sich jedoch nachteilig aus, dass die über den Lufteinlass in den Druckbehälter eintretende verunreinigte Luft auf ihrem Weg zum Luftentölelement das im Ölsumpf bzw. Sammelbecken befindliche Öl ggf. aufwirbelt und/oder aufschäumt. Dadurch wird bereits abgeschiedenes Öl erneut vom Gasstrom mitgetragen (Redispergierung), was die Effektivität der Abscheidung verringert. Ein derartiges Aufschäumen bzw. Aufwirbeln des Öls im Ölsumpf ist besonders stark ausgeprägt, wenn die verunreinigte Luft tangential in den Druckbehälter einströmt, da hierdurch das Öl im Ölsumpf im Allgemeinen in Rotation gerät und somit leichter zu schäumen beginnt.

Um diese nachteiligen Effekte zu vermeiden, weisen herkömmliche Behälter eine vergleichsweise große axiale bzw. vertikale Länge auf, so dass der Einfluss der einströmenden ölhaltigen Luft auf das Öl im Sammelbecken des Behälters vergleichsweise gering gehalten werden kann. Große Baumaße eines derartigen Behälters rufen jedoch wiederum andere Nachteile, z.B. erhöhte Materialkosten, hervor.

Der Erfindung liegt daher die Aufgabe zugrunde, eine Vorrichtung zur Abscheidung von Flüssigkeiten aus Gasen bereitzustellen, die auch bei vergleichsweise kleinen Abmessungen eine effektive Luftentölung gewährleistet.

### Offenbarung der Erfindung

Diese Aufgabe wird gelöst durch eine Vorrichtung der eingangs genannten Art, die dadurch gekennzeichnet ist, dass ein Spiralabscheider zwischen dem Gaseinlass und dem Luftentölelement angeordnet ist, wobei der Spiralabscheider den Behälter in eine obere und eine untere Kammer unterteilt.

Dadurch dass der Spiralabscheider erfindungsgemäß zwischen dem Gaseinlass und dem Abscheideelement bzw. dem Luftentölelement angeordnet ist, wird eine Unterteilung des Behälters in eine obere und eine untere Kammer erreicht. Somit wird die zu reinigende Luft, nachdem sie über den Einlass in den Behälter eingeströmt ist, über den Spiralabscheider zum Luftentölelement geführt. Auch die Luft, die sich in der unteren Kammer über einem Sammelbecken für abgeschiedenes Öl befindet, gelangt somit nur dann in die obere Kammer, wenn sie durch den Spiralabscheider strömt. Dies hat zur Folge, dass ggf. redispergiertes Öl bzw. redispergierte Flüssigkeit durch den Spiralabscheider erneut abgeschieden wird. Es versteht sich, dass im Spiralabscheider auch eine Abscheidung von Öl stattfindet, das unmittelbar aus dem eintretenden Gasstrom, z.B. aus Verunreinigungen durch einen Kompressor, insbesondere durch einen Schraubenkompressor, stammt.

Ferner erlaubt die erfindungsgemäße Ausbildung der Vorrichtung aufgrund der Vermeidung von Aufwirbelungen eine kompaktere, insbesondere eine kürzere Bauweise. Des Weiteren kann der Bereich oberhalb des Sammelbeckens für abgeschiedene Flüssigkeiten kürzer gestaltet werden, da nicht befürchtet werden muss, dass aufgewirbelte Flüssigkeit in das darüber angeordnete Luftentölelement gelangt.

Die erfindungsgemäße Vorrichtung zur Abscheidung von Flüssigkeiten aus Gasen ist nicht auf das Abscheiden von Öl aus Luft beschränkt. Anstelle des Luftentölelements ist es ebenfalls möglich, ein Element zum Abscheiden jedweder Flüssigkeiten aus unterschiedlichen Gasen vorzusehen. Die erfindungsgemäße Vorrichtung ist daher beispielsweise auch zur Abscheidung von Wasser aus Luft oder anderen Gasen bzw. Gasgemischen geeignet.

Erfindungsgemäß weist der Spiralabscheider einen Gaseintritt und einen Gasaustritt auf, wobei der Gaseintritt in die untere Kammer mündet, und wobei der Gasaustritt in die obere Kammer mündet. Durch das Einmünden des Gaseintritts in die untere Kammer stellt sich eine vorteilhafte Strömungsführung bei der Durchströmung des Spiralabscheiders ein. Insbesondere wird dadurch erreicht, dass eine Gasströmung von der unteren Kammer in die obere Kammer lediglich über den Spiralabscheider möglich ist. Weiter erfindungsgemäß ist der Gasaustritt des Spiralabscheiders geodätisch unterhalb des Luftentölelements, insbesondere unmittelbar unterhalb eines Vorabscheiders des Luftentölelements, angeordnet. Dadurch wird in vorteilhafter Weise erreicht, dass der Bauraum zwischen dem Gasaustritt des Spiralabscheiders und dem Luftentölelement bzw. dem Vorabscheider minimiert wird. Eine kürzere Baulänge der erfindungsgemäßen Vorrichtung ist die Folge. Unter unmittelbar im Sinne dieser Weiterbildung wird eine maximale Entfernung des Gasaustritts des Spiralabscheiders zum Vorabscheider verstanden, welche den Durchmesser des Gasaustritts nicht überschreitet. Der Spiralabscheider kann an dem Luftentölelement, insbesondere an einem Vorabscheider des Luftentölelements befestigbar ausgebildet sein. Es versteht sich, dass ggf. auch ein größerer vertikaler Abstand zwischen dem Gasaustritt des Spiralabscheiders und dem Luftentölelement vorgesehen werden kann, wenn dies für die Strömungsführung günstig ist.

Bei einer Weiterbildung der vorhergehenden Ausführungsform ist der Gaseintritt des Spiralabscheiders unmittelbar am bzw. vor dem Gaseinlass des Behälters angeordnet. Dadurch wird in vorteilhafter Weise erreicht, dass der zu reinigende Gasstrom, welcher durch den Gaseinlass in den Behälter einströmt, nahezu in seiner Gesamtheit in den Spiralabscheider und von dort in das Luftentölelement gelangt, ohne dass wesentliche Anteile des Gasstroms in den Bereich der unteren Kammer, der sich oberhalb des Sammelbeckens befindet, strömen können und die dort eventuell angesammelten Flüssigkeit(en) möglicherweise in Rotation versetzen und aufwirbeln können. Der eintretende Gasstrom kann hierbei insbesondere tangential in die untere Kammer des Behälters einströmen, und der Spiralabscheider kann so angeordnet sein, dass die Strömungsrichtung beim Eintritt in den Spiralabscheider nahezu unverändert bleibt.

Durch die oben beschriebenen Maßnahmen kann erreicht werden, dass zu reinigendes Gas über den Spiralabscheider zum Luftentölelement strömt, ohne dabei die Flüssigkeit, die sich in einem in der unteren Kammer geodätisch unten angeordneten Sammelbecken befindet, aufzuwirbeln, aufzuschäumen oder in Rotation zu versetzen.

Eine ebenfalls bevorzugte Ausführungsform der Vorrichtung ist dadurch gekennzeichnet, dass der Spiralabscheider einen einzigen spiralförmigen Strömungskanal aufweist. Durch den einen spiralförmigen Strömungskanal wird dem Gasstrom eine definierte, fortdauernde, insbesondere konstante, Richtungsänderung aufgezwungen, die eine besonders effektive Abscheidung ermöglicht. Die Spirale verläuft insbesondere im Wesentlichen in einer Ebene.

Im Gegensatz dazu bildet sich in einem Zyklon der Strömungsweg frei aus, wobei der Weg einzelner Partikel insbesondere vom Volumentstrom und der Partikelmasse abhängig ist.

Bei einer Weiterbildung der vorhergehenden Ausführungsform ist ein effektiver Strömungsquerschnitt im Strömungskanal näherungsweise konstant. Dadurch erfolgt beim Durchströmen des Spiralabscheiders weder eine Verdichtung noch eine Entspannung des Gases, so dass der Spiralabscheider einen geringen Strömungswiderstand darstellt.

In einer Weiterbildung ist der Spiralabscheider als archimedische Spirale ausgeführt, d.h. die Spiralwandung verläuft entlang einer archimedischen Spirale, bei welcher der Radius proportional zum Drehwinkel wächst. So genannte archimedische Spiralen weisen einen Strömungskanal konstanter Breite auf, so dass ein Spiralabscheider, dem eine archimedische Spiralform zugrunde liegt, in der Regel einen konstanten Strömungsquerschnitt aufweist.

Unter effektivem Strömungsquerschnitt wird im Sinne dieser Ausführungsform der Flächenquerschnitt durch den Strömungskanal verstanden, ohne dass es dabei zwingend auf die Form des Querschnitts ankommt. In der Regel weist der Strömungsquerschnitt eines erfindungsgemäßen Spiralabscheiders einen quadratischen, rechteck- oder trapezförmigen Querschnitt auf. Mischformen sind ebenfalls möglich.

In einer Weiterbildung weist die Spirale einen sich von außen nach innen vergrößernden Strömungsquerschnitt auf, wodurch die Strömungsgeschwindigkeit reduziert werden kann. Dadurch kann insbesondere, wenn erforderlich, ein insbesondere teilweiser Ausgleich dazu geschaffen werden, dass die Umlenkung der Strömung durch den zunehmend geringeren Radius ansteigt.

Bei einer anderen Weiterbildung beträgt die Zahl der Windungen des Strömungskanals des Spiralabscheiders zwischen eins und vier, insbesondere zwischen zwei und vier. Bei einer derartigen Weiterbildung stellt sich eine besonders effektive Abscheidung von beispielsweise Öl aus Luft im Spiralabscheider ein. Hierbei kann das Verhältnis aus dem Durchmesser des Spiralabscheiders und der Breite des Strömungskanals beispielsweise zwischen ca. vier und sechs liegen. Unter dem Durchmesser wird hierbei der Außendurchmesser des Spiralabscheiders, also die maximale Abmessung zwischen den Außenwandungen des zu äußerst liegenden Strömungskanals verstanden, welche durch das Zentrum des Spiralabscheiders verläuft. Unter der Breite des Strömungskanals wird hierbei der Abstand zwischen benachbarten Wandungen (Strömungskanalwandungen) des Spiralabscheiders (gemessen in radialer Richtung) verstanden.

Bei einer weiteren Weiterbildung ist der Gaseintritt radial außen ausgebildet und der Gasaustritt ist zentrisch und geodätisch über dem Gaseintritt ausgebildet. Dadurch strömt das zu reinigende Gas im Behälter in vorteilhafter Weise von außen nach innen und von unten nach oben. Dies hat zur Folge, dass im Sammelbecken befindliche Flüssigkeit nicht durch den Spiralabscheider in die obere Kammer des Behälters gelangen kann.

Eine andere Weiterbildung ist dadurch gekennzeichnet, dass der Spiralabscheider einen Flüssigkeitsablauf, insbesondere einen Ölablauf, aufweist, der vorzugsweise zentrisch (und geodätisch unten) angeordnet ist. Durch einen Flüssigkeitsablauf, insbesondere einen Ölablauf, kann die im Spiralabscheider abgeschiedene Flüssigkeit in einfacher Art und Weise abgeführt werden. Typischerweise befindet sich ein derartiger Flüssigkeitsablauf über dem Sammelbecken des Behälters, so dass die abgeschiedene Flüssigkeit einfach in das Sammelbecken geleitet wird bzw. tropft.

Bevorzugt ist ferner eine Weiterbildung, bei welcher der Spiralabscheider eine Bodenwandung aufweist, die trichterförmig ausgebildet ist. Durch die Trichterform der Bodenwandung sammelt sich im Spiralabscheider abgeschiedene Flüssigkeit im Bereich einer Trichterspitze. Der Flüssigkeitsablauf, insbesondere der Ölablauf, ist im Bereich der Trichterspitze angeordnet. Dort kann die Flüssigkeit (das Öl) über den Flüssigkeitsablauf in das Sammelbecken ablaufen. Die Trichterform der Bodenwandung ist typischerweise derart ausgerichtet, dass sich die Trichterspitze am geodätisch unteren Ende befindet.

Bei einer anderen Weiterbildung weist der Flüssigkeitsablauf, insbesondere der Ölablauf, ein Ventil auf. Durch das Ventil wird verhindert, dass im Sammelbecken aufgefangene Flüssigkeit bzw. Öl über den Flüssigkeitsablauf in den Spiralabscheider gelangt. Dies wird sowohl bei einem zu hohen Stand der Flüssigkeit als auch bei einem Aufschäumen der Flüssigkeit in der unteren Kammer verhindert. Ferner wird verhindert, dass Gas bzw. Luft durch den Flüssigkeitsablauf in den Spiralabscheider gelangt. Schließlich ist ebenfalls eine Ausführungsform bevorzugt, bei welcher der Spiralabscheider zur Unterteilung des Behälters in die obere und die untere Kammer eine Abdeckplatte aufweist. Durch eine Abdeckplatte, welche dichtend mit der Behälterwandung abschließt und einen Gasdurchtritt lediglich im Bereich des Gasaustritts erlaubt wird eine definierte Trennung zwischen unterer und oberer Kammer des Behälters erreicht.

In einer weiteren Ausführungsform weist der Spiralabscheider an seiner Außenseite mindestens ein Strömungsleitelement zur Verhinderung der Ausbildung einer Wirbelströmung in der unteren Kammer auf. Das Strömungsleitelement kann beispielsweise als ein Steg ausgebildet sein, der sich z.B. axial über die gesamte Länge des Spiralabscheiders und ausgehend von der äußeren Wand des Spiralabscheiders in radialer Richtung (nahezu) bis zur Innenwand des Behälters erstreckt. Der Gaseinlass in den Behälter ist typischer Weise in Umfangsrichtung zwischen dem Strömungsleitelement und dem Gaseintritt des Spiralabscheiders angeordnet.

Weitere Merkmale und Vorteile der Erfindung ergeben sich aus der nachfolgenden Beschreibung von Ausführungsbeispielen der Erfindung, anhand der Figuren, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

### Kurze Beschreibung der Zeichnungen

Ausführungsbeispiele sind in der schematischen Zeichnung dargestellt und werden in der nachfolgenden Beschreibung erläutert. Es zeigen:
Fig. 1 eine erfindungsgemäße Vorrichtung zur Abscheidung von Flüssigkeiten aus Gasen mit einem Spiralabscheider im Längsschnitt,
Fig. 2 den Spiralabscheider aus Fig. 1 in einer perspektivischen Ansicht;
Fig. 3 den Spiralabscheider aus den Fign. 1 und 2 mit einer Abdeckplatte; und
Fig. 4 einen Querschnitt eines unteren Bereichs einer erfindungsgemäßen Vorrichtung mit eingesetztem Spiralabscheider.

### Ausführungsform(en) der Erfindung

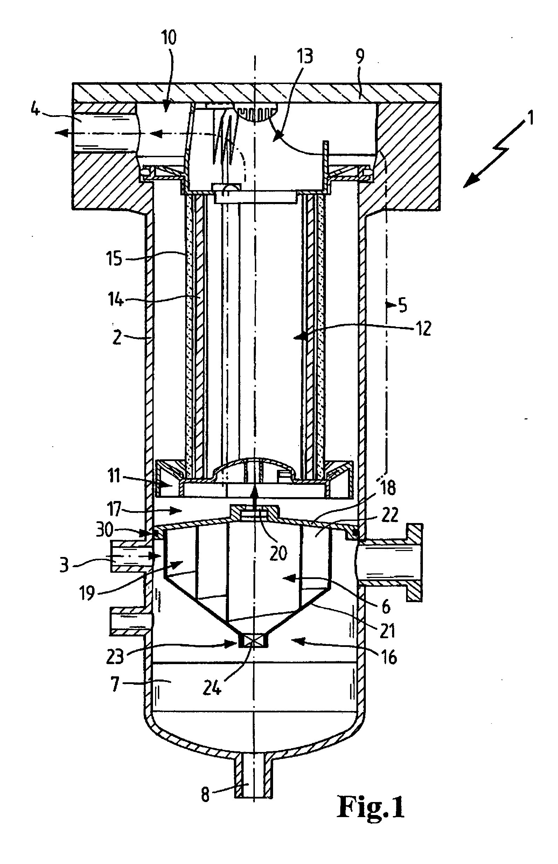

In Fig. 1 ist ein Längsschnitt durch eine Vorrichtung 1 zur Abscheidung von Flüssigkeiten aus Gasen dargestellt. Die Vorrichtung 1 umfasst einen (Druck-)Behälter 2 mit einem Gaseinlass 3 und einem Gasauslass 4, ein in dem Behälter 2 angeordnetes Abscheideelement in Form eines Luftentölelements 5 sowie einen Spiralabscheider 6. Am geodätisch unteren Ende des Behälters 2 (in Fig. 1 unten) weist der Behälter 2 in seinem Inneren ein Sammelbecken 7 für abgeschiedene Flüssigkeiten, im vorliegenden Fall Öl, und einen Ölablass 8 auf. Am geodätisch oberen Ende des Behälters 2 ist eine durch einen Deckel 9 abschließbare Öffnung 10 vorgesehen, durch die das Luftentölelement 5 in den Behälter 2 eingesetzt und bei Bedarf ausgewechselt werden kann. Das Luftentölelement 5 umfasst einen Vorabscheider 11, einen Hauptabscheider 12 sowie einen Nachabscheider 13. In Fig. 1 ist der Vorabscheider 11 als Inlinezyklon ausgebildet. Der Hauptabscheider 12 ist aus einem Stützrohr 14 und einem das Stützrohr umgebenden Vlies 15 aufgebaut. Als Nachabscheider 13 ist im Luftentölelement 5 ebenfalls ein Inlinezyklon verbaut. Es versteht sich, dass auch andere Varianten des Vorabscheiders 11, Hauptabscheiders 12 und des Nachabscheiders 13 zum Einsatz kommen können, wie sie z.B. in der eingangs genannten EP 1 844 840 A2 dargestellt sind. Selbstverständlich kann ggf. auch auf einen Vorabscheider bzw. einen Nachabscheider verzichtet werden.

Der Spiralabscheider 6 ist zwischen dem Gaseinlass 3 des Behälters 2 und dem Luftentölelement 5 angeordnet. Der Spiralabscheider 6 unterteilt den Behälter 2 in eine untere Kammer 16 und eine obere Kammer 17, wobei der Gaseinlass 3 in die untere Kammer 16 mündet und wobei sich das Luftentölelement 5 in der oberen Kammer 17 befindet. Auf der Oberseite des Spiralabscheiders 6 ist eine Abdeckplatte 18 vorgesehen, welche mittels einer Dichtung, insbesondere des Dichtrings 30 die Trennung zwischen den beiden Kammern 16, 17 bewirkt.

Der Behälter 2 wird typischerweise zusammen mit einem nicht dargestellten Kompressor, insbesondere einem Schraubenkompressor, und einem ebenfalls nicht dargestellten Druckspeicher verwendet. Ein Luftverdichtungssystem umfassend den Kompressor, den Behälter 2 und den Druckspeicher und arbeitet in der Regel in der folgenden Art und Weise: Luft wird zunächst von dem Kompressor angesaugt und verdichtet. Dabei wird die Luft in der Regel mit Öl aus dem Kompressor verunreinigt. Bevor die verunreinigte Luft in den Druckspeicher gelangt, wird aus ihr in dem (Druck-)Behälter 2 das Öl abgeschieden.

Zur Abscheidung des Öls strömt die verunreinigte Luft zunächst über den Gaseinlass 3 in die untere Kammer 16 des Behälters 2 ein. Dadurch, dass ein Gaseintritt 19 des Spiralabscheiders 6 unmittelbar in der Nähe des Gaseinlasses 3 des Behälters 2 angeordnet ist, strömt näherungsweise die gesamte verunreinigte Luft in den Spiralabscheider 6 ein. Der Gaseinlass 3 erzeugt hierbei einen tangentialen Gaseintritt (in Umfangsrichtung), und der Gaseintritt 19 des Spiralabscheiders 6 ist hierbei so angeordnet, dass die Strömungsrichtung des Gasstroms beim Eintritt in den Spiralabscheider 6 nahezu konstant bleibt. Nur vernachlässigbar geringe Mengen von verunreinigter Luft strömen daher in den übrigen Teil der unteren Kammer 16 ein.

Die in den Spiralabscheider 6 eingeströmte Luft durchströmt diesen auf einer spiralförmigen Bahn von außen nach innen und tritt an einem Gasaustritt 20 des Spiralabscheiders 6, der zentrisch am Spiralabscheider 6 angeordnet ist, nach oben in Richtung Luftentölelement 5 aus. Der Gasaustritt 20 ist dabei geodätisch höher liegend ausgebildet als der Gaseintritt 19 und im vorliegenden Beispiel unmittelbar unterhalb des Vorabscheiders 11 des Luftentölelements 5 angeordnet.

Während des Durchströmens des Spiralabscheiders 6 wird der Luftstrom ständig zu einer Richtungsänderung entlang der gekrümmten Spiralbahn gezwungen. Da die Flüssigkeits- bzw. Öltröpfchen in der verunreinigten Luft träger sind als die Luft, prallen sie kontinuierlich auf die inneren Wandungen des Spiralabscheiders 6, so dass die Ölanteile in der Luft zunehmend abgeschieden werden. Die Unterseite des Spiralabscheiders 6, insbesondere seine Bodenwandung 21, ist trichterförmig ausgebildet, so dass sich das abgeschiedene Öl an dem jeweils tiefsten Punkt eines jeweiligen Strömungskanals 22 sammelt und in Richtung einer Trichterspitze des Spiralabscheiders 6 fließt. An der Trichterspitze ist ein Flüssigkeitsablauf 23 ausgebildet, der ein Abfließen des im Spiralabscheider 6 abgeschiedenen Öls ermöglicht. Um ein Eindringen von Luft und/ oder Öl aus der unteren Kammer 16 in den Spiralabscheider 6 zu vermeiden, ist im Flüssigkeitsablauf 23 ein Ventil 24 vorgesehen. Der (einzige) Strömungskanal 22 des Spiralabscheiders 6 weist über seine gesamte Länge eine konstante Querschnittsfläche auf.

Die aus dem Gasaustritt 20 des Spiralabscheiders 6 austretende, teilweise gereinigte Luft durchströmt den Vor-, Haupt- und Nachabscheider 11,12,13 des Luftentölelements 5, wodurch eine gründliche Reinigung der Luft von Flüssigkeitstropfen bzw. Öl erfolgt. Schließlich gelangt die gereinigte Luft über den Gasauslass 4 des Behälters 2 in den nicht dargestellten Druckspeicher, wie durch einen Pfeil dargestellt ist.

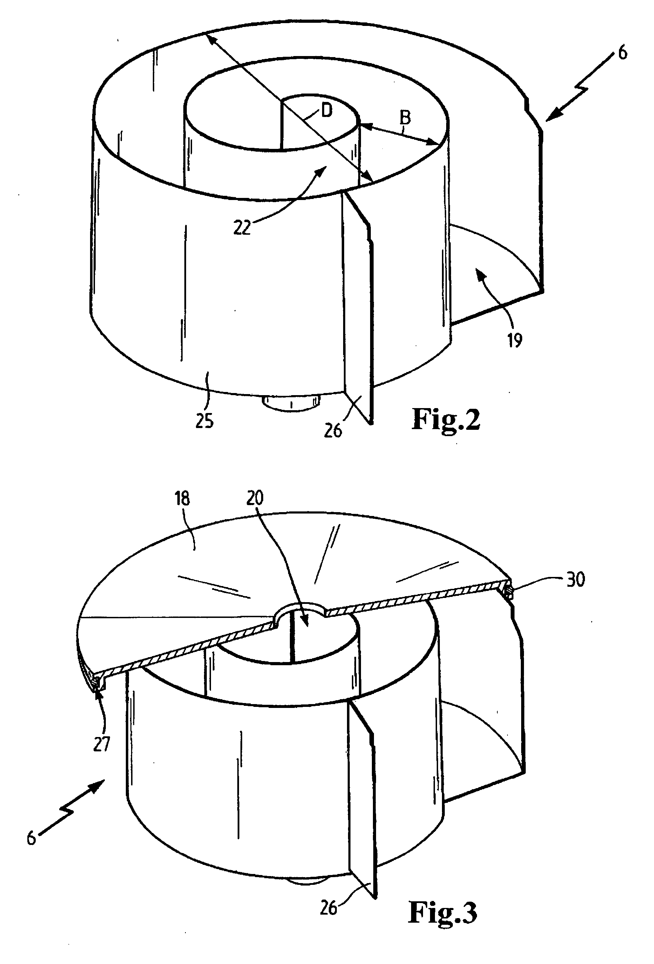

In Fig. 2 ist der Spiralabscheider 6 aus Fig. 1 in einer perspektivischen Ansicht gezeigt. Auf der rechten Seite der Fig. 2 ist der Gaseintritt 19 in den Spiralabscheider 6 ersichtlich. Circa 60° in Umfangsrichtung versetzt ist an einer Außenwandung 25 des Spiralabscheiders 6 ein Steg 26 ausgebildet, der im in den Behälter 2 eingebauten Zustand (vgl. Fig. 1) eine rotierende Luft- bzw. Flüssigkeitsströmung in der unteren Kammer 16 unterbindet. Dadurch wird ein Aufwirbeln, Aufschäumen und Redispergieren von im Sammelbecken 7 befindlichem Öl zusätzlich erschwert.

Der Spiralabscheider 6 weist im vorliegenden Beispiel ca. 1,5 Windungen (vollständige Umläufe des Strömungskanals 22 um 360°) auf, wobei typischer Weise die Zahl der Windungen zwischen eins und vier liegt. Der Spiralabscheider 6 hat einen Durchmesser D und sein Strömungskanal 22 die Breite B, wobei das Verhältnis D:B beispielsweise zwischen ca. vier und ca. sechs liegen kann.

In Fig. 3 ist der Spiralabscheider 6 der Fign. 1 und 2 mit der Abdeckplatte 18 abgebildet. In der Mitte der Abdeckplatte 18 ist der Gasaustritt 20 des Spiralabscheiders 6 in Form einer Öffnung ausgebildet. Am Außenumfang der Abdeckplatte 18 ist eine Nut 27 zur Aufnahme eines Dichtrings 30 ausgebildet. Durch den Einsatz eines Dichtrings 30 in die Abdeckplatte 18 wird eine gasdichte Unterteilung des Behälters 2 in die untere und obere Kammer 16,17 erzielt, d.h. das Gas kann lediglich durch den Gasaustritt 20 von der unteren Kammer 16 in die obere Kammer 17 gelangen.

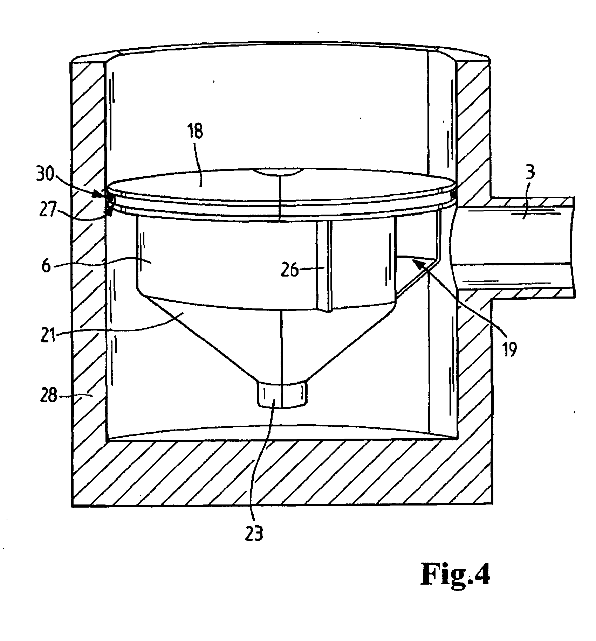

Fig. 4 zeigt einen Querschnitt durch einen unteren Bereich eines Behälters 28, in den der Spiralabscheider 6 eingesetzt ist. Der Gaseintritt 19 des Spiralabscheiders 6 ist unmittelbar am Gaseinlass 3 des Behälters 28 angeordnet. Ferner ist in Fig. 4 die Trichterform der Bodenwandung 21 des Spiralabscheiders 6 sowie der Flüssigkeitsablauf 23 an der Trichterspitze ersichtlich.

## Patentansprüche

1. Vorrichtung (1) zur Abscheidung von Flüssigkeiten aus Gasen, umfassend einen Behälter (2;28) mit einem Gaseinlass (3) und einem Gasauslass (4) sowie einem Luftentölelement (5), das im Strömungsweg zwischen dem Gaseinlass (3) und dem Gasauslass (4) angeordnet ist, wobei ein Spiralabscheider (6) zwischen dem Gaseinlass (3) und dem Abscheideelement (5) angeordnet ist und den Behälter (2; 28) in eine obere Kammer (17) und eine untere Kammer (16) unterteilt, **dadurch gekennzeichnet, dass** der Spiralabscheider (6) einen Gaseintritt (19) und einen Gasaustritt (20) aufweist, wobei der Gaseintritt (19) in die untere Kammer (16) mündet, und wobei der Gasaustritt (20) in die obere Kammer (17) mündet, wobei das Luftentölelement einen Vorabscheider (11) umfasst und der Gasaustritt (20) des Spiralabscheiders (6) geodätisch unter dem Luftentölelement und unmittelbar unterhalb des Vorabscheiders (11) des Luftentölelements (5) angeordnet ist.

2. Vorrichtung (1) nach Anspruch 1, **dadurch gekennzeichnet, dass** der Gaseintritt (19) des Spiralabscheiders (6) unmittelbar vor dem Gaseinlass (3) des Behälters (2) angeordnet ist.

3. Vorrichtung (1) nach einem der vorhergehenden Ansprüche, **dadurch gekennzeichnet, dass** der Spiralabscheider (6) einen einzigen spiralförmigen Strömungskanal (22) aufweist.

4. Vorrichtung (1) nach Anspruch 3, **dadurch gekennzeichnet, dass** ein effektiver Strömungsquerschnitt im Strömungskanal (22) näherungsweise konstant ist.

5. Vorrichtung (1) nach einem der Ansprüche 3 oder 4, **dadurch gekennzeichnet, dass** die Zahl der Windungen des Spiralabscheiders (6) zwischen eins und vier liegt.

6. Vorrichtung (1) nach einem der Ansprüche 2 bis 5, **dadurch gekennzeichnet, dass** der Gaseintritt (19) radial außen ausgebildet ist und der Gasaustritt (20) zentrisch und geodätisch über dem Gaseintritt (19) ausgebildet ist.

7. Vorrichtung (1) nach einem der vorhergehenden Ansprüche, **dadurch gekennzeichnet, dass** der Spiralabscheider (6) einen Flüssigkeitsablauf (23), insbesondere einen Ölablauf, aufweist, der vorzugsweise zentrisch angeordnet ist.

8. Vorrichtung (1) nach Anspruch 7, **dadurch gekennzeichnet, dass** der Spiralabscheider (6) eine Bodenwandung (21) aufweist, die trichterförmig ausgebildet ist.

9. Vorrichtung (1) nach Anspruch 7 oder 8, **dadurch gekennzeichnet, dass** der Flüssigkeitsablauf (23), insbesondere der Ölablauf, ein Ventil (24) aufweist.

10. Vorrichtung (1) nach einem der vorhergehenden Ansprüche, **dadurch gekennzeichnet, dass** der Spiralabscheider (6) zur Unterteilung des Behälters (2) in die obere und die untere Kammer (16, 17) eine Abdeckplatte (18) aufweist.

11. Vorrichtung (1) nach einem der vorhergehenden Ansprüche, **dadurch gekennzeichnet, dass** der Spiralabscheider (6) an seiner Außenwandung (25) mindestens ein Strömungsleitelement (26) zur Verhinderung der Ausbildung einer Wirbelströmung in der unteren Kammer (16) aufweist.

## Claims

1. Arrangement (1) for separating liquids from gases, comprising a reservoir (2; 28) having a gas inlet (3) and a gas outlet (4) as well as an air-oil separating element (5), which is disposed in the flow path between the gas inlet (3) and the gas outlet (4), wherein a spiral separator (6) is disposed between the gas inlet (3) and the separating element (5) and divides the reservoir (2; 28) into an upper chamber (17) and a lower chamber (16), **characterized in that** the spiral separator (6) features a gas entry (19) and a gas exit (20), wherein the gas entry (19) ends in the lower chamber (16), and wherein the gas exit (20) ends in the upper chamber (17), wherein the air-oil separating element comprises a pre-separator (11) and the gas exit (20) of the spiral separator (6) is disposed geodetically under the air-oil separating element and directly underneath the pre-separator (11) of the air-oil separating element (5).

2. Arrangement (1) according to claim 1, **characterized in that** the gas entry (19) of the spiral separator (6) is disposed directly in front of the gas inlet (3) of the reservoir (2).

3. Arrangement (1) according to one of the above claims, **characterized in that** the spiral separator (6) features only one spiral-shaped flow channel (22).

4. Arrangement (1) according to claim 3, **characterized in that** an effective flow cross-section in the flow channel (22) is approximately constant.

5. Arrangement (1) according to one of the claims 3 or 4, **characterized in that** the number of volutes of the spiral separator (6) is between one and four.

6. Arrangement (1) according to one of the claims 2 to 5, **characterized in that** the gas entry (19) is formed radially outwards and the gas exit (20) is formed centrically and geodetically above the gas entry (19).

7. Arrangement (1) according to one of the above claims, **characterized in that** the spiral separator (6) features a liquid drain (23), in particular an oil drain which is preferably arranged centrically.

8. Arrangement (1) according to claim 7, **characterized in that** the spiral separator (6) features a bottom wall (21) which is funnel-shaped.

9. Arrangement (1) according to claim 7 or 8, **characterized in that** the liquid drain (23), in particular the oil drain, features a valve (24).

10. arrangement (1) according to one of the above claims, **characterized in that** the spiral separator (6) features a cover plate (18) for dividing the reservoir (2) into the upper and the lower chamber (16, 17).

11. Arrangement (1) according to one of the above claims, **characterized in that** the spiral separator (6) features at its exterior wall (25) at least one flow guiding element (26) for preventing an eddy flow from being formed in the lower chamber (16).

## Revendications

1. Dispositif (1) destiné à séparer des liquides de gaz, comprenant un récipient (2 ; 28) avec une entrée de gaz (3) et une sortie de gaz (4) ainsi qu'un élément de déshuilage de l'air (5) qui est disposé dans la voie d'écoulement entre l'entrée de gaz (3) et la sortie de gaz (4), un séparateur hélicoïdal (6) étant placé entre l'entrée de gaz (3) et l'élément séparateur (5) et partageant le récipient (2 ; 28) en une chambre supérieure (17) et une chambre inférieure (16), **caractérisé en ce que** le séparateur hélicoïdal (6) présente une admission de gaz (19) et une évacuation de gaz (20), l'admission de gaz (19) débouchant dans la chambre inférieure (16) et l'évacuation de gaz (20) débouchant dans la chambre supérieure (17), l'élément de déshuilage de l'air comprenant un pré-séparateur (11) et l'évacuation de gaz (20) du séparateur hélicoïdal (6) étant située géodésiquement sous l'élément de déshuilage de l'air et juste en dessous du pré-séparateur (11) de l'élément de déshuilage de l'air (5).

2. Dispositif (1) selon la revendication 1, **caractérisé en ce que** l'admission de gaz (19) du séparateur hélicoïdal (6) est disposée juste devant l'entrée de gaz (3) du récipient (2).

3. Dispositif (1) selon l'une des revendications précédentes, **caractérisé en ce que** le séparateur hélicoïdal (6) est doté d'un seul canal d'écoulement (22) hélicoïdal.

4. Dispositif (1) selon la revendication 3, **caractérisé en ce qu'**une section de flux effective dans le canal d'écoulement (22) est quasiment constante.

5. Dispositif (1) selon l'une des revendications 3 ou 4, **caractérisé en ce que** le nombre de spires du séparateur hélicoïdal (6) est compris entre un et quatre.

6. Dispositif (1) selon l'une des revendications 2 à 5, **caractérisé en ce que** l'admission de gaz (19) est exécutée en sens radial à l'extérieur et que l'évacuation de gaz (20) est centrée et située géodésiquement au-dessus de l'admission de gaz (19).

7. Dispositif (1) selon l'une des revendications précédentes, **caractérisé en ce que** le séparateur hélicoïdal (6) présente un écoulement de liquide (23), en particulier un écoulement d'huile, qui est de préférence centré.

8. Dispositif (1) selon la revendication 7, **caractérisé en ce que** le séparateur hélicoïdal (6) présente une paroi inférieure (21) réalisée en forme d'entonnoir.

9. Dispositif (1) selon la revendication 7 ou 8, **caractérisé en ce que** l'écoulement de liquide (23), en particulier l'écoulement d'huile, est pourvu d'une soupape (24).

10. Dispositif (1) selon l'une des revendications précédentes, **caractérisé en ce que** le séparateur hélicoïdal (6) est pourvu d'une plaque de recouvrement (18) afin de subdiviser le récipient (2) en une chambre supérieure et une chambre inférieure (16, 17).

11. Dispositif (1) selon l'une des revendications précédentes, **caractérisé en ce que** la paroi extérieure (25) du séparateur hélicoïdal (6) est pourvue d'au moins un élément de guidage du flux (26) destiné à éviter la formation de tourbillons dans la chambre inférieure (16).
